# EUROPEAN PATENT APPLICATION

(11) **EP 4 592 237 A1**
(43) Date of publication of application: **30.07.2025**
(21) Application number: 23867440.2
(22) Date of filing: 18.09.2023
(51) Int. Cl.: B66D 1/74, B66D 1/14

(54) **CLUTCH WINCH STRUCTURE FOR PROTECTING DRIVING DEVICE**

(30) Priority: 19.09.2022 CN 202222471483 U
(71) Applicant: Autoflight (Kunshan) Co., Ltd., Suzhou, Jiangsu 215345 (CN)
(72) Inventor: TIAN, Yu, Suzhou, Jiangsu 215345 (CN); DAI, Chunxu, Suzhou, Jiangsu 215345 (CN)
(74) Representative: MERH-IP Matias Erny Reichl Hoffmann Patentanwälte PartG mbB
(86) International application number: PCT/CN2023/119328
(87) International publication number: WO 2024/061151

(57) **Abstract**

The present invention relates to the field of protecting driving devices, and in particular to a clutch winch structure for protecting driving devices, comprising: a bottom plate; a transmission mechanism, the transmission mechanism being fixedly connected to the bottom plate; a winch, the winch being connected to the transmission mechanism; a friction wheel, the friction wheel being connected to the bottom plate, the friction wheel being configured to be able to abut against or disengage from the winch.

## Description

### Technical Field

The present application relates to the field of protecting driving devices, and in particular to a clutch winch structure for protecting a driving device.

### Background

Some clutch winch structures in the prior art only have a simple retraction and release function. In some occasions, such as when used in the process of drone cargo delivery, for example, the motor will be heavier due to the weight of the cargo. In the process of cargo delivery, due to excessive instantaneous force, the take-up drive components in the clutch winch structure, such as the motor and other take-up drive components, may be damaged. Therefore, the take-up drive components need to be detached and protected. For this reason, it is necessary to design a clutch winch structure specifically for protecting the drive components.

### Specification

The purpose of this invention is to provide a clutch winch structure for protecting a driving device, which has good safety, high integration, and can well protect the driving device when in use.

To achieve this purpose, this invention adopts the following technical solutions.

This invention provides a clutch winch structure for protecting a driving device, characterized in that it comprises:
a bottom plate;
a transmission mechanism, wherein the transmission mechanism is fixedly connected to the bottom plate;
a winch, wherein the winch is connected to the transmission mechanism;
a friction wheel, wherein the friction wheel is connected to the bottom plate, and the friction wheel is configured to be able to abut against or disengage from the winch.

As a preferred solution, the transmission mechanism comprises:
a servo motor, wherein the servo motor is fixedly connected to the bottom plate;
a servo motor connecting rod, wherein the servo motor is used to drive the servo motor connecting rod;
a sliding rod, wherein one end of the sliding rod is connected to the servo motor connecting rod, and another end of the sliding rod being away from the servo motor connecting rod is connected to the winch.

As a preferred solution, the clutch winch structure for protecting a driving device further comprises:
a motor, wherein the motor is connected to the bottom plate, and is used to drive the friction wheel to rotate.

As a preferred solution, the transmission mechanism further comprises a spring, wherein the spring is sleeved on the sliding rod to provide a restoring force for the winch.

As a preferred solution, the winch is a polyurethane winch.

As a preferred solution, the friction wheel is a polyurethane friction wheel.

As a preferred solution, the transmission mechanism further comprises a wheel frame, which is used to support the winch.

As a preferred solution, a rope is provided on the winch for collecting and releasing goods.

As a preferred solution, the rope is a Kevlar rope.

As a preferred solution, the material of the bottom plate is carbon fiber.

Beneficial effects of the present invention:
The clutch winch structure provided by the present invention will protect the take-up driving device during use, and avoid damage to the take-up driving device due to excessive instantaneous force by separating the take-up driving device from the line-releasing mechanism. Therefore, the clutch winch structure has good safety and high integration, and can well protect the driving device during use.

### BRIEF DESCRIPTION OF THE DRAWINGS

Figure 1 is a schematic diagram of the structure of the clutch winch structure for protecting a driving device provided by the present invention;
Figure 2 is a schematic diagram of the top view of the combination of the winch and the friction wheel of the clutch winch structure for protecting a driving device provided by the present invention;

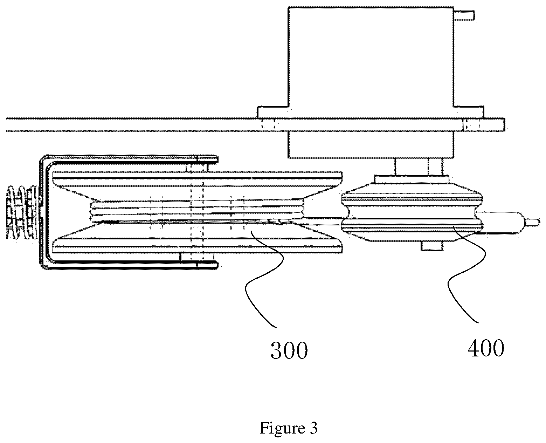

Figure 3 is a schematic diagram of the top view of the separation of the winch and the friction wheel of the clutch winch structure for protecting a driving device provided by the present invention.

### Specific implementation method

The technical solution of the present invention is further described below in conjunction with the accompanying drawings and implementation methods. It is understood that the specific embodiments described herein are only used to explain the present invention, not to limit the present invention. It should also be noted that, for the convenience of description, only the parts related to the present invention are shown in the accompanying drawings, but not all.

In the description of the present invention, it should be noted that, unless otherwise clearly specified and limited, the terms "installation", "connection", and "connection" should be understood in a broad sense, for example, it can be a fixed connection or a detachable connection. It can be a mechanical connection or an electrical connection. It can be a direct connection or an indirect connection through an intermediate medium, or it can be a connection between two components. For ordinary technicians in this field, the specific meanings of the above terms in the present invention can be understood in specific circumstances.

In the present invention, unless otherwise clearly specified and limited, the first feature "above" or "below" the second feature can include the first and second features being in direct contact, or the first and second features not being in direct contact but being in contact through another feature between them. Moreover, the first feature "above", "above" and "above" the second feature include the first feature being directly above and obliquely above the second feature, or simply indicating that the first feature is higher in level than the second feature. The first feature being "below", "below" and "below" the second feature includes the first feature being directly below and obliquely below the second feature, or simply means that the first feature is less horizontally than the second feature.

In the description of this embodiment, the terms "upper", "lower", "right", etc., orientation or positional relationship are based on the orientation or positional relationship shown in the drawings, and are only for the convenience of description and simplification of operation, rather than indicating or implying that the device or element referred to must have a specific orientation, be constructed and operated in a specific orientation, and therefore cannot be understood as a limitation on this invention. In addition, the terms "first" and "second" are only used to distinguish in the description and have no special meaning.

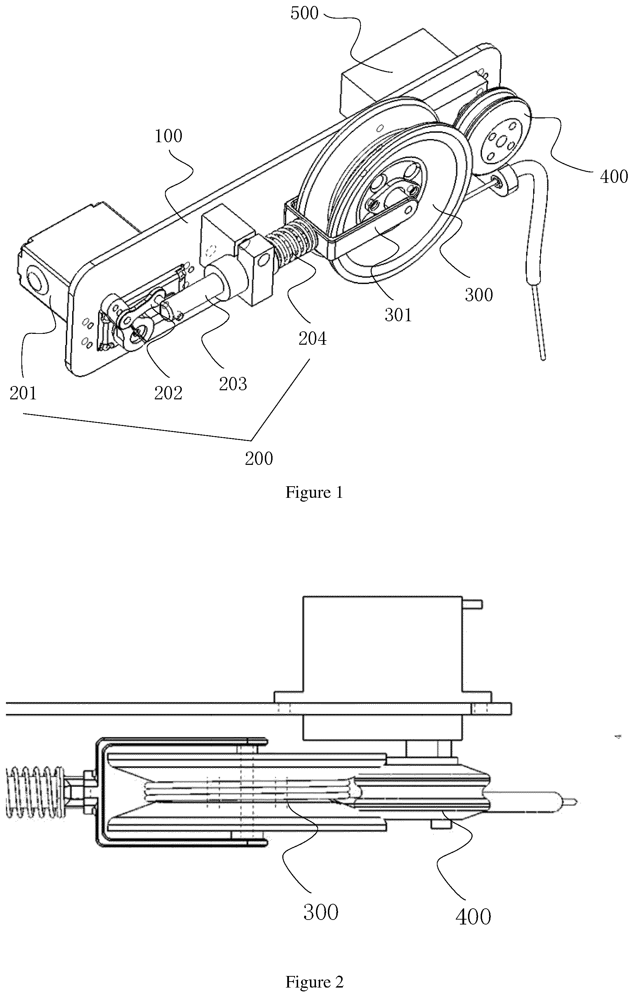

As shown in FIG. 1, the present invention provides a clutch winch structure for protecting a driving device, specifically including a bottom plate 100 and a transmission mechanism 200 fixedly connected to the bottom plate 100. In addition, the clutch winch structure for protecting a driving device provided by the present invention further comprises a winch 300 connected to the transmission mechanism 200 and a friction wheel 400 connected to the bottom plate 100. Specifically, the friction wheel 400 is configured to be able to abut or disengage from the winch 300, so as to protect a motor or other winding driving device. The winch 300 is further configured with a wheel frame 301 for supporting the winch 300. The material of the bottom plate 100 can preferably be carbon fiber material, which is light in weight and has good bearing strength.

Continuing to refer to FIG. 1, the transmission mechanism 200 of the clutch winch structure for protecting a driving device provided by the present invention, further comprises a servo motor 201 fixedly connected to the bottom plate 100 and a servo motor connecting rod 202 driven by the servo motor 201. In addition, the transmission mechanism 200 further comprises a sliding rod 203, one end of the sliding rod 203 is connected to the servo motor connecting rod 202, and another end of the sliding rod 203 away from the servo motor connecting rod 202 is connected to the winch 300.

It is worth noting that the transmission mechanism 200 further comprises a spring 204, which is sleeved on the sliding rod 203, and its purpose is to provide a restoring force for the winch 300.

Furthermore, the clutch winch structure for protecting a driving device provided by the present invention specifically comprises a motor 500, which is connected to the bottom plate 100 and is used to drive the rotation of the friction wheel 400.

The winch 300 in this invention can be made of a variety of materials. In this invention, the winch 300 is preferably made of polyurethane material, which has good properties such as wear resistance, chemical corrosion resistance, high strength, high elasticity, low pressure resistance, strong shock absorption, tear resistance, radiation resistance, high load-bearing and shock absorption. The polyurethane wheel has excellent sound absorption characteristics, and the wheel does not generate noise during movement, which can achieve a silent effect. Similarly, the friction wheel 400 in this invention is further made of polyurethane material, and the reasons are not repeated here.

When in use, the servo motor 201 controls the servo motor connecting rod 202 to rotate, which drives the sliding rod 203 to move horizontally and overcomes the force of the spring 204, thereby driving the winch 300 to separate from the friction wheel 400. When the winch 300 and the friction wheel 400 are separated, the winch 300 will be in a free rotation state, and the line-releasing mechanism is in a free line-releasing state. When releasing the line, the load mass is too large, which may cause a large instantaneous impact force. Since the winch 300 and the friction wheel 400 are separated from each other, the friction wheel 400 will not be impacted at this time, thereby protecting the motor connected to the friction wheel 400. After the load is completely released, the servo motor 201 is started again, and the sliding rod 203 is pushed under the rotation of the servo motor connecting rod 202. The winch 300 returns under the action of the spring 204 and contacts the friction wheel 400 again, and then the motor connected to the friction wheel 400 is driven to rotate, driving the winch 300 to rotate. In particular, the rope provided on the winch 300 is preferably a Kevlar rope, which has good tensile strength and can carry a large load.

Obviously, the above embodiments of the present invention are only examples for clearly illustrating the present invention, and are not intended to limit the implementation methods of the present invention. For ordinary technicians in the relevant field, other different forms of changes or modifications can be made on the basis of the above description. It is not necessary and impossible to list all implementation methods here. Any modifications, equivalent substitutions and improvements made within the spirit and principles of the present invention shall be included in the scope of protection of the claims of the present invention.

## Claims

1. A clutch winch structure for protecting a driving device, **characterized in that** it comprises:
a bottom plate;
a transmission mechanism, wherein the transmission mechanism is fixedly connected to the bottom plate;
a winch, wherein the winch is connected to the transmission mechanism;
a friction wheel, wherein the friction wheel is connected to the bottom plate, and the friction wheel is configured to be able to abut against or disengage from the winch.

2. The clutch winch structure for protecting a driving device according to claim 1, **characterized in that** the transmission mechanism comprises:
a servo motor, wherein the servo motor is fixedly connected to the bottom plate;
a servo motor connecting rod, wherein the servo motor is used to drive the servo motor connecting rod;
a sliding rod, wherein one end of the sliding rod is connected to the servo motor connecting rod, and another end of the sliding rod being away from the servo motor connecting rod is connected to the winch.

3. The clutch winch structure for protecting a driving device according to claim 2, **characterized in that** the clutch winch structure for protecting a driving device further comprises:
a motor, wherein the motor is connected to the bottom plate, and is used to drive the friction wheel to rotate.

4. The clutch winch structure for protecting a driving device according to claim 2, **characterized in that** the transmission mechanism further comprises a spring, wherein the spring is sleeved on the sliding rod to provide a restoring force for the winch.

5. The clutch winch structure for protecting a driving device according to claim 4, **characterized in that** the winch is a polyurethane winch.

6. The clutch winch structure for protecting a driving device according to claim 5, **characterized in that** the friction wheel is a polyurethane friction wheel.

7. The clutch winch structure for protecting a driving device according to claim 2, **characterized in that** the transmission mechanism further comprises a wheel frame, which is used to support the winch.

8. The clutch winch structure for protecting a driving device according to claim 7, **characterized in that** a rope is provided on the winch for collecting and releasing goods.

9. The clutch winch structure for protecting a driving device according to claim 8, **characterized in that** the rope is a Kevlar rope.

10. The clutch winch structure for protecting a driving device according to claim 1, **characterized in that** the material of the bottom plate is carbon fiber.
